# EUROPÄISCHE PATENTSCHRIFT

(11) **EP 1 478 917 B1**
(45) Veröffentlichungstag und Bekanntmachung des Hinweises auf die Patenterteilung: **13.07.2005**
(21) Anmeldenummer: 03717108.9
(22) Anmeldetag: 22.02.2003
(51) Int. Cl.: G01N 21/89

(54) **VERFAHREN ZUR VERWENDUNG EINER ELEKTRONISCHEN BILDAUSWERTEEINRICHTUNG**
METHOD OF USING AN ELECTRONIC IMAGE EVALUATING DEVICE
PROCEDE D'UTILISATION D'UN DISPOSITIF ELECTRONIQUE D'EVALUATION D'IMAGES

(30) Priorität: 26.02.2002 DE 10208286
(43) Veröffentlichungstag der Anmeldung: 24.11.2004
(60) Teilanmeldung: 04103532.0
(73) Patentinhaber: Koenig & Bauer Aktiengesellschaft, 97080 Würzburg (DE)
(72) Erfinder: STÖBER, Bernd, Rüdiger, 33378 Rheda-Wiedenbrück (DE)
(86) Internationale Anmeldenummer: PCT/DE2003/000569
(87) Internationale Veröffentlichungsnummer: WO 2003/073084

(56) Entgegenhaltungen:
- EP-A- 0 809 395
- WO-A-00/42381
- WO-A-91/14173
- DE-A- 4 102 122
- US-A- 5 384 859

## Beschreibung

Die Erfindung betrifft Verfahren zur Verwendung einer elektronischen Bildauswerteeinrichtung gemäß dem Oberbegriff der Ansprüche 1 oder 2.

Es sind elektronische Bildauswerteeinrichtungen zur Prüfung von Druckerzeugnissen bekannt, mit denen bestimmte Merkmale auf dem Druckerzeugnis aufgenommen und ausgewertet werden können. Zur Prüfung dieser speziellen Merkmale werden normalerweise einzelne angepasste Sensoren oder Kameras eingesetzt. Da die Position und die Anzahl von den auszuwertenden Merkmalen auf dem Druckerzeugnis grundsätzlich beliebig sein kann, ist die Anzahl und Positionierung der entsprechenden Sensoren oder Kameras in der Bildauswerteeinrichtung entsprechend anzupassen. Bei der Verwendung derartiger an einzelne Merkmale angepasster Kamera- oder Sensorsysteme ist es deshalb erforderlich, dass die einzelnen Sensoren oder Kameras verstellbar gelagert sind, um über den verschiedenen Positionen der auszuwertenden Merkmale positioniert werden zu können.

Eine Vermessung oder sichere Beurteilung der Merkmale benötigt einen festen Maßstab für beide Bildfelddimensionen. Der feste Maßstab lässt sich nur durch eine Bildaufnahme mit flächigen Bildsensoren gewährleisten, da die Bildsensorfläche selbst den räumlichen Bezug der abgebildeten Objekte zueinander darstellt. Bei Zeilenkamerasystemen ist der räumliche Bezug der abgebildeten Objekte wegen der nicht immer exakt einzuhaltenden zeitlichen Synchronisation der Bildzeilen zueinander, nicht mit der erforderlichen Zuverlässigkeit gewährleistet.

Die US 2002/0018600 A1 beschreibt einen Bildscanner, dessen Sensorfeld selektiv ausgelesen wird.

Die DE 41 36 461 C2 offenbart eine Vorrichtung zur großflächigen Inspektion von Druckerzeugnissen mit mehreren parallel betriebenen Flächensensoren.

Die WO 00/42381 A1 beschreibt eine Bildauswerteeinrichtung mit einem Flächensensor, der eine Vielzahl lichtempfindlicher Pixel aufweist, wobei die Pixel einzeln auswertbar sind, so dass frei wählbare Ausschnitte selektiv auswertbar sind.

Die EP 809 395 A2 offenbart ein Verfahren zum Betrieb eines Flächensensors, bei dem jeder Pixel ausgewählt und einzeln oder gruppenweise ausgelesen werden kann.

Der Erfindung liegt die Aufgabe zugrunde, Verfahren zur Verwendung einer elektronischen Bildauswerteeinrichtung zu schaffen.

Die Aufgabe wird erfindungsgemäß durch die Merkmale der Ansprüche 1 oder 2 gelöst.

Die Erfindung beruht auf dem Grundgedanken in der elektronischen Bildauswerteeinrichtung Flächensensoren einzusetzen, deren Pixel einzeln und/oder in Gruppen angesteuert und ausgewertet werden können. Derartige frei adressierbare Flächensensoren erlauben es, dass aus dem maximal beobachtbaren Abtastbereich des Flächensensors, der sich aus der Größe des Flächensensors und der entsprechend davor angeordneten Optik ergibt, frei wählbare Ausschnitte selektiert werden können. Nur die Bilddaten dieser selektierten Ausschnitte werden dann zu der nachgeordneten Auswerteelektronik weitergeleitet, so dass die Bilddaten dort auswertbar sind. Die übrigen Bereiche des maximalen Abtastbereiches werden dagegen ausgeblendet und in der Auswerteelektronik nicht berücksichtigt. Im Ergebnis gelingt es dadurch, durch entsprechende Ansteuerung des Flächensensors die auszuwertenden Bilddaten je nach Anwendung zu selektieren. Damit können die auszuwertenden Merkmalen an beliebiger Stelle des Druckerzeugnisses aufgenommen werden, ohne dass eine mechanische Verstellung oder Justage einzelner Sensoren erforderlich wäre.

Außerdem können die Pixel mindestens eines Flächensensors, z. B. CMOS-Sensors, nur teilweise ausgelesen werden, so dass einzelne Bildbereiche selektiv ausgeblendet werden können, um die zu verarbeitende Menge an Bilddaten zu reduzieren. Aus diesen Daten kann sowohl die Lage eines Ausschnittes ermittelt werden als auch Bilddaten eines Ausschnittes mit reduzierter Auflösung.

Diese CMOS-Sensoren weisen teilweise einen einem Speicherbaustein entsprechenden Bildaufbau auf, so dass einzelne Pixel wie Speicherzellen abfragbar sind. Es müssen also nur Bildelemente ausgelesen werden, die tatsächlich auch ausgewertet werden sollen.

Um den mit der Bildauswerteeinrichtung maximal beobachtbaren Abtastbereich vergrößern zu können, ohne dementsprechend immer größere Flächensensoren einsetzen zu müssen, können in der Bildauswerteeinrichtung mehrere Flächensensoren vorgesehen werden. Die Bilddaten der einzelnen Flächensensoren werden dann gemeinsam in der nachgeordneten Auswerteeinrichtung ausgewertet. Im Ergebnis kann durch die Kombination mehrerer Flächensensoren erreicht werden, dass durch den Einsatz relativ preisgünstiger Standardbauteile ein sehr großer maximal beobachtbarer Abtastbereich durch die Bildauswerteeinrichtung ausgewertet werden kann.

Damit beim Einsatz mehrerer Flächensensoren keine Bereiche entstehen, die mit der Bildauswerteeinrichtung nicht auswertbar sind, sollten die maximal beobachtbaren Abtastbereiche der einzelnen Flächensensoren zumindest geringfügig überlappen. Die Bilddaten der einzelnen Flächensensoren aus den Überlappungsbereichen können dann in der nachgeordneten Auswerteeinrichtung derart berücksichtigt werden, dass der Überlappungsbereich nur einmal ausgewertet wird.

Um mit der Bildauswerteeinrichtung ein Druckerzeugnis mit hoher Effektivität auswerten zu können, sollte in der Bildauswerteeinrichtung eine Fördereinnchtung vorgesehen werden, mit der das Druckerzeugnis am Flächensensor vorbeigefördert werden kann. Dabei ist es besonders vorteilhaft, wenn die Pixel der Flächensensoren in Abhängigkeit der Förderbewegung des Druckerzeugnisses ansteuerbar und auswertbar sind. Dadurch kann im Ergebnis erreicht werden, dass die von den einzelnen Flächensensoren zur Beobachtung selektierten Ausschnitte in Abhängigkeit der Förderbewegung des Druckerzeugnisses selektiert werden.

Vielfach ist für eine zuverlässige Bildauswertung eine ausreichende Ausleuchtung des Druckerzeugnisses erforderlich. Deshalb sollte in der Bildauswerteeinnchtung eine Beleuchtungseinrichtung, insbesondere eine Blitzbeleuchtung, vorgesehen sein. Diese Blitzbeleuchtung erzeugt mit einer bestimmten Wiederholfrequenz Lichtblitze.

Alternativ zu einer Blitzbeleuchtung kann beim Vorhandensein eines elektronischen Vollbildshutters auch eine Konstantlichtbeleuchtung eingesetzt werden.

Der Vollbildshutter begrenzt auf elektronischem Weg die zeitliche Integration des Lichtes auf den Bildsensor.

Häufig werden elektronische Bildauswerteeinrichtungen dazu eingesetzt Bedruckstoffbahnen, die mehrfach mit einem wiederkehrenden Format bedruckt sind, elektronisch auszuwerten. Bei derartigen Auswerteaufgaben ist es besonders vorteilhaft, wenn auf der Bedruckstoffbahn jedem einzelnen Format eine Referenzmarkierung zugeordnet ist. In der elektronischen Bildauswerteeinrichtung sollte dann eine Sensoreinrichtung vorgesehen werden, mit der die Referenzmarkierung detektiert werden kann. Dadurch ist es möglich, dass die Sensoreinrichtung ein Synchronisationssignal abgibt, mit der die Bildauswerteeinrichtung mit der Bewegung der Bedruckstoffbahn synchronisiert werden kann.

Ausführungsbeispiele der Erfindung sind in den Zeichnungen dargestellt und werden im folgenden näher beschrieben.

### Es zeigen:

- Fig. 1: den schematischen Aufbau einer erfindungsgemäßen Bildauswerteeinnchtung;
- Fig. 2: ein auszuwertendes Druckerzeugnis mit verschiedenen auszuwertenden Merkmalen in perspektivischer Ansicht.

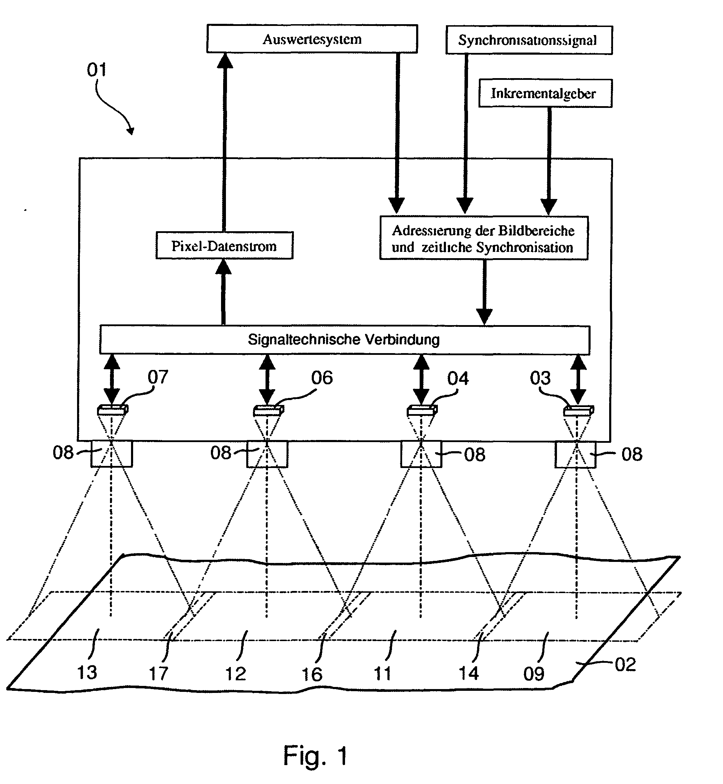

Bei der in Fig. 1 schematisch dargestellten Bildauswerteeinrichtung 01 kann eine Bedruckstoffbahn 02 unter einem Flächensensorsystem mit vier Flächensensoren 03, 04, 06 und 07 durchgefördert werden. Diese Flächensensoren 03 bis 07 sind an einem gemeinsamen Trägerelement angeordnet. Jedem der Flächensensoren 03 bis 07 ist eine Optik 08 zugeordnet, durch die ein bestimmter Bildbereich auf der Bedruckstoffbahn 02 auf die lichtempfindlichen Pixel der Flächensensoren 03 bis 07 abgebildet wird.

Aus der Bauart der Flächensensoren 03 bis 07, den Eigenschaften der Optiken 08 und dem Abstand zwischen den Optiken 08 und der Druckstoffbahn 02 ergeben sich maximal beobachtbare Abtastbereiche 09; 11; 12 und 13, die mittels der Flächensensoren 03 bis 07 ausgewertet werden können. Die maximal beobachtbaren Abtastbereiche 09 bis 13 sind jeweils ungefähr rechteckig, wobei jeweils benachbarte Abtastbereiche in Überlappbereichen 14; 16 und 17 überlappen. Im Ergebnis kann durch Kombination der Flächensensoren 03 bis 07 ein insgesamt rechteckiger Gesamtabtastbereich ausgewertet werden, dessen Breite geringfügig größer ist als die Breite der Druckstoffbahn 02.

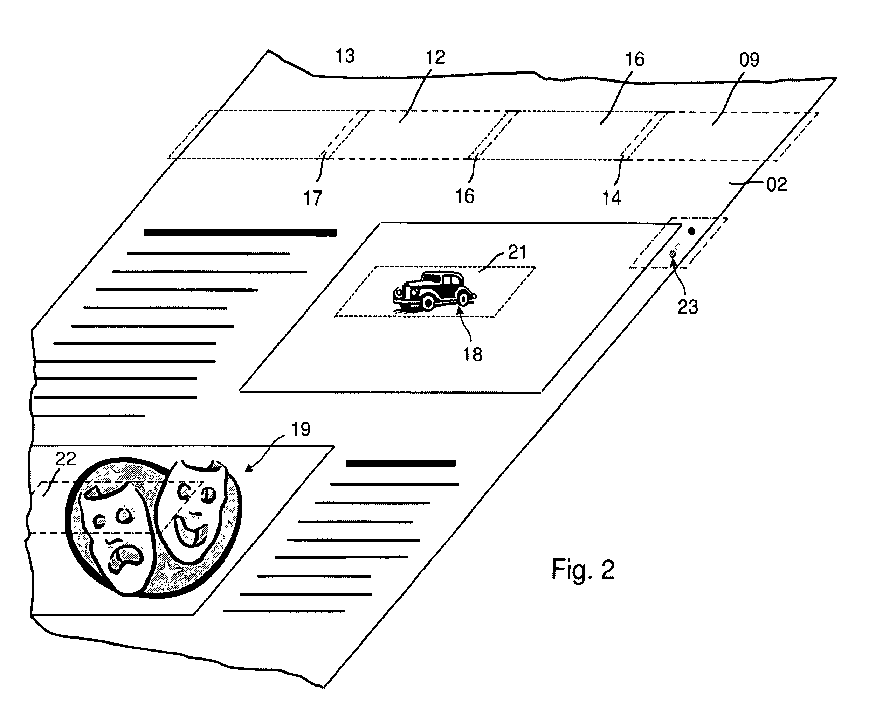

In Fig. 2 ist die Druckstoffbahn 02 in bedruckter Form dargestellt, wobei auf der Bedruckstoffbahn 02 in wiederholten Formaten die Bildmotive 18 und 19 aufgedruckt sind. Außerdem ist auf die Bedruckstoffbahn 02 außerdem noch eine jedem Format zugeordnete Referenzmarkierung 23 aufgedruckt. Zur Bewertung des Druckergebnisses auf der Druckstoffbahn 02 sollen nun jeweils rechteckige Ausschnitte 21 und 22 aus dem Druckbild im Bereich der Bildmotive 18 und 19 mittels der Bildauswerteeinrichtung 01 selektiv ausgewertet und mit Referenzdaten verglichen werden.

Diese Referenzmarkierung 23 kann auch einen Erfassungsbereich darstellen, der z. B. bezüglich der Lage der Farbfelder zueinander beurteilt werden könnte (Registervermessung). Die Referenzmarkierung 23 kann auch für den Formatbezug hergenommen werden.

Die Erfassung der Referenzmarkierung 23 muß jedoch nicht unbedingt mit dem Multiflächensensor selbst erfolgen. Es kann auch ein zusätzlicher Sensor angeordnet sein, der nur logisch dem System zugeordnet wird. Zudem könnte eine Synchronisation auch mit dem Format auch aus einem Maschinensignal abgeleitet werden.

Dazu wird die Bedruckstoffbahn 02 unter den Flächensensoren 03 bis 07 hindurchgefördert. Sobald die Referenzmarkierung 23 detektiert worden ist wird ein entsprechendes Synchronisationssignal generiert, so dass anschließend zunächst der Ausschnitt 21 und anschließend der Ausschnitt 22 lagegenau mittels der Bildsensoren 03 bis 07 aufgenommen und ausgewertet werden kann. Dabei werden jeweils lediglich die Pixel der Flächensensoren 03 und 07 angesteuert, so dass nur die Ausschnitte 21 und 22 aufgenommen werden. Die restlichen Bereiche der Druckstoffbahn 02, die unter den Bildsensoren 03 bis 07 durchgeführt werden, werden dagegen ausgeblendet.

Bezugszeichenliste
- 01: Bildauswerteeinrichtung
- 02: Druckstoffbahn, Bedruckstoffbahn, Druckerzeugnis
- 03: Flächensensor, Bildsensor
- 04: Flächensensor, Bildsensor
- 05: -
- 06: Flächensensor, Bildsensor
- 07: Flächensensor, Bildsensor
- 08: Optik
- 09: maximaler Abtastbereich (Flächensensor 03)
- 10: -
- 11: maximaler Abtastbereich (Flächensensor 04)
- 12: maximaler Abtastbereich (Flächensensor 06)
- 13: maximaler Abtastbereich (Flächensensor 07)
- 14: Überlappbereich
- 15: -
- 16: Überlappbereich
- 17: Überlappbereich
- 18: Bildmotiv
- 19: Bildmotiv
- 20: -
- 21: Ausschnitt
- 22: Ausschnitt
- 23: Referenzmarkierung

## Patentansprüche

1. Verfahren zur Verwendung einer elektronischen Bildauswerteeinrichtung (01) mit zumindest einem Flächensensor (03; 04; 06; 07), der eine Vielzahl lichtempfindlicher Pixel aufweist, wobei jeder Pixel in Abhängigkeit des an der entsprechenden Pixelposition empfangenen Lichteingangssignals ein elektrisches Ausgangssignal abgibt, dessen Stärke mit dem Lichteingangssignal korreliert und in einer Auswerteeinheit als Bildinformation auswertbar ist, wobei die Pixel des Flächensensors (03; 04; 06; 07) einzeln und/oder in Gruppen ansteuerbar und auswertbar sind, so dass frei wählbare Ausschnitte (21; 22) aus dem maximal beobachtbaren Abtastbereich (09; 11; 12; 13) selektiv auswertbar sind, wobei in der Bildauswerteeinrichtung (01) mehrere Flächensensoren (03; 04; 06; 07) vorgesehen sind und wobei die Bildauswerteeinrichtung (01) zur Prüfung eines Druckerzeugnisses (02) verwendet wird und wobei in der Bildauswerteeinrichtung (01) eine Fördereinrichtung vorgesehen ist, mit der das Druckerzeugnis (02) an den Flächensensoren (03; 04; 06; 07) vorbei gefördert werden kann, und wobei die von den einzelnen Flächensensoren (03; 04, 06, 07) zur Beobachtung selektierten Ausschnitte in Abhängigkeit der Förderbewegung des Druckerzeugnisses (02) selektiert werden.

2. Verfahren zur Verwendung einer elektronischen Bildauswerteeinrichtung (01) mit zumindest einem Flächensensor (03; 04; 06; 07), der eine Vielzahl lichtempfindlicher Pixel aufweist, wobei jeder Pixel in Abhängigkeit des an der entsprechenden Pixelposition empfangenen Lichteingangssignals ein elektrisches Ausgangssignal abgibt, dessen Stärke mit dem Lichteingangssignal korreliert und in einer Auswerteeinheit als Bildinformation auswertbar ist, wobei die Pixel des Flächensensors (03; 04; 06; 07) einzeln und/oder in Gruppen ansteuerbar und auswertbar sind, so dass frei wählbare Ausschnitte (21, 22) aus dem maximal beobachtbaren Abtastbereich (09; 11; 12; 13) selektiv auswertbar sind, wobei eine Bildauswerteeinrichtung (01) einer Beleuchtungseinrichtung zugeordnet ist und wobei die Beleuchtungseinrichtung als mit einer bestimmten Wiederholfrequenz erzeugende Blitzeinnchtung ausgebildet ist oder ein Vollbildshutter angeordnet ist, wobei die Bildauswerteeinrichtung (01) zur Prüfung eines Druckerzeugnisses (02) verwendet wird, wobei in der Bildauswerteeinrichtung (01) eine Fördereinrichtung vorgesehen ist, mit der das Druckerzeugnis (02) am Flächensensor (03; 04; 06; 07) vorbei gefördert werden kann, wobei die Pixel der Flächensensoren (03, 04; 06; 07) in Abhängigkeit der Förderbewegung des Druckerzeugnisses (02) ansteuerbar und auswertbar sind.

3. Verfahren zur Verwendung einer elektronischen Bildauswerteeinrichtung (01) nach Anspruch 1, **dadurch gekennzeichnet, dass** der maximal beobachtbare Abtastbereich (09; 11; 12; 13) jedes Flächensensors (03; 04; 06; 07) rechteckig ist.

4. Verfahren zur Verwendung einer elektronischen Bildauswerteeinrichtung (01) nach Anspruch 2, **dadurch gekennzeichnet, dass** der maximal beobachtbare Abtastbereich (09; 11; 12; 13) des Flächensensors (03; 04; 06; 07) rechteckig ist.

5. Verfahren zur Verwendung einer elektronischen Bildauswerteeinrichtung (01) nach Anspruch 2, **dadurch gekennzeichnet, dass** in der Bildauswerteeinrichtung (01) mehrere Flächensensoren (03; 04; 06; 07) vorgesehen sind.

6. Verfahren zur Verwendung einer elektronischen Bildauswerteeinrichtung (01) nach Anspruch 1 oder 5, **dadurch gekennzeichnet, dass** die maximal beobachtbaren Abtastbereiche (09; 11; 12; 13) der einzelnen Flächensensoren (03; 04; 06; 07) in Überlappungsbereichen (14; 16; 17) überlappen.

7. Verfahren zur Verwendung einer elektronischen Bildauswerteeinrichtung (01) nach Anspruch 1, 5 oder 6, **dadurch gekennzeichnet, dass** die maximal beobachtbaren Abtastbereiche (09, 11, 12; 13) der Flächensensoren (03, 04, 06; 07) zusammen einen rechteckigen Gesamtabtastbereich ergeben.

8. Verfahren zur Verwendung einer elektronischen Bildauswerteeinrichtung (01) nach Anspruch 1 oder 5, **dadurch gekennzeichnet, dass** mehrere Flächensensoren (03, 04; 06; 07) auf einem gemeinsamen Trägerelement angeordnet sind.

9. Verfahren zur Verwendung einer elektronischen Bildauswerteeinrichtung (01) nach Anspruch 1, **dadurch gekennzeichnet, dass** in der Bildauswerteeinrichtung (01) eine Beleuchtungseinrichtung vorgesehen ist, mit der das Druckerzeugnis (02) ausgeleuchtet werden kann.

10. Verfahren zur Verwendung einer elektronischen Bildauswerteeinrichtung (01) nach Anspruch 9, **dadurch gekennzeichnet, dass** die Beleuchtungseinrichtung in der Art einer Blitzbeleuchtung ausgebildet ist.

11. Verfahren zur Verwendung einer elektronischen Bildauswerteeinrichtung (01) nach Anspruch 10, **dadurch gekennzeichnet, dass** die Blitzbeleuchtung mit einer bestimmten Wiederholfrequenz Lichtblitze erzeugt.

12. Verfahren zur Verwendung einer elektronischen Bildauswerteeinnchtung (01) nach Anspruch 1, **dadurch gekennzeichnet, dass** in der Bildauswerteeinrichtung (01) ein Vollbildshutter vorgesehen ist.

13. Verfahren zur Verwendung einer elektronischen Bildauswerteeinrichtung (01) nach Anspruch 1, **dadurch gekennzeichnet, dass** die Bildauswerteeinrichtung (01) zur Kontrolle einer Bedruckstoffbahn (02) verwendet wird, dass auf der Bedruckstoffbahn (02), die mehrfach mit einem wiederkehrenden Format bedruckt ist, für jedes Format eine zugeordnete Referenzmarkierung (23) angeordnet ist.

14. Verfahren zur Verwendung einer elektronischen Bildauswerteeinnchtung (01) nach Anspruch 13, **dadurch gekennzeichnet, dass** ein Synchronisationssignal zur Synchronisation der Bildauswerteeinrichtung (01) mit der Bewegung der Bedruckstoffbahn (02) ausgebende Sensoreinrichtung angeordnet ist.

15. Verfahren zur Verwendung einer elektronischen Bildauswerteeinrichtung (01) nach Anspruch 14, **dadurch gekennzeichnet, dass** in der Bildauswerteeinrichtung (01) die Sensoreinrichtung vorgesehen ist, das heißt ein Flächensensor (03; 04; 06; 07) zur Synchronisation verwendet wird.

16. Verfahren zur Verwendung einer elektronischen Bildauswerteeinrichtung (01) nach Anspruch 14, **dadurch gekennzeichnet, dass** zusätzlich zur Bildauswerteeinrichtung (01) eine zusätzliche Sensoreinrichtung angeordnet ist, das heißt zusätzlich zu dem Flächensensor oder den Flächensensoren der Bildauswerteeinrichtung (01) ein weiterer Sensor vorgesehen ist.

17. Verfahren zur Verwendung einer elektronischen Bildauswerteeinrichtung (01) nach Anspruch 1 oder 2, **dadurch gekennzeichnet, dass** jedem Flächensensor (03; 04; 06; 07) eine eigene Optik (08) zugeordnet ist.

18. Verfahren zur Verwendung einer elektronischen Bildauswerteeinrichtung (01) nach Anspruch 1 oder 2, **dadurch gekennzeichnet, dass** der Flächensensor (03; 04, 06; 07) als CMOS-Sensor ausgebildet ist.

## Claims

1. A method of using an electronic image-evaluation device (01) with at least one surface sensor (03; 04; 06; 07) which comprises a plurality of light-sensitive pixels, wherein each pixel emits an electrical output signal in a manner dependent upon the light-input signal received at the corresponding pixel position, the strength of the output signal being correlated with the light-input signal and being capable of being evaluated as image information in an evaluation unit, wherein the pixels of the surface sensor (03; 04; 06; 07) are capable of being controlled and evaluated individually and/or in groups, so that freely selectable portions (21; 22) from the maximum observable sensing range (09; 11; 12; 13) are capable of being evaluated selectively, wherein a plurality of surface sensors (03; 04; 06; 07) are provided in the image-evaluation device (01) and wherein the image-evaluation device (01) is used for checking a printed product (02) and wherein a conveying device, by which the printed product (02) can be conveyed past the surface sensors (03; 04; 06; 07), is provided in the image-evaluation device (01), and wherein the portions selected by the individual surface sensors (03; 04, 06, 07) for observation are selected in a manner dependent upon the conveying movement of the printed product (02).

2. A method of using an electronic image-evaluation device (01) with at least one surface sensor (03; 04; 06; 07) which comprises a plurality of light-sensitive pixels, wherein each pixel emits an electrical output signal in a manner dependent upon the light-input signal received at the corresponding pixel position, the strength of the output signal being correlated with the light-input signal and being capable of being evaluated as image information in an evaluation unit, wherein the pixels of the surface sensor (03; 04; 06; 07) are capable of being controlled and evaluated individually and/or in groups, so that freely selectable portions (21; 22) from the maximum observable sensing range (09; 11, 12; 13) are capable of being evaluated selectively, wherein an image-evaluation device (01) is associated with an illumination device and wherein the illumination device is designed in the form of a flash device which generates at a specified repetition frequency or a complete-picture shutter is provided, wherein the image-evaluation device (01) is used for checking a printed product (02), wherein a conveying device, by which the printed product (02) can be conveyed past the surface sensor (03; 04; 06; 07), is provided in the image-evaluation device (01), [and] wherein the pixels of the surface sensors (03, 04; 06; 07) are capable of being controlled and evaluated in a manner dependent upon the conveying movement of the printed product (02).

3. A method of using an electronic image-evaluation device (01) according to Claim 1, **characterized in that** the maximum observable sensing range (09; 11; 12; 13) of each surface sensor (03; 04; 06; 07) is rectangular.

4. A method of using an electronic image-evaluation device (01) according to Claim 2, **characterized in that** the maximum observable sensing range (09; 11; 12; 13) of the surface sensor (03; 04; 06; 07) is rectangular.

5. A method of using an electronic image-evaluation device (01) according to Claim 2, **characterized in that** a plurality of surface sensors (03; 04; 06; 07) are provided in the image-evaluation device (01).

6. A method of using an electronic image-evaluation device (01) according to Claim 1 or 5, **characterized in that** the maximum observable sensing ranges (09; 11; 12; 13) of the individual surface sensors (03; 04; 06; 07) overlap in the overlap regions (14; 16; 17).

7. A method of using an electronic image-evaluation device (01) according to Claim 1, 5 or 6, **characterized in that** the maximum observable sensing ranges (09; 11; 12; 13) of the surface sensors (03; 04; 06, 07) together produce a rectangular total sensing range.

8. A method of using an electronic image-evaluation device (01) according to Claim 1 or 5, **characterized in that** a plurality of surface sensors (03; 04; 06; 07) are arranged on a common carrier element.

9. A method of using an electronic image-evaluation device (01) according to Claim 1, **characterized in that** an illumination device, by which the printed product (02) can be illuminated, is provided in the image-evaluation device (01).

10. A method of using an electronic image-evaluation device (01) according to Claim 9, **characterized in that** the illumination device is designed in the manner of a flash device.

11. A method of using an electronic image-evaluation device (01) according to Claim 10, **characterized in that** the flash device generates light flashes at a specified repetition frequency.

12. A method of using an electronic image-evaluation device (01) according to Claim 1, **characterized in that** a complete-picture shutter is provided in the image-evaluation device (01).

13. A method of using an electronic image-evaluation device (01) according to Claim 1, **characterized in that** the image-evaluation device (01) is used for monitoring a web (02) of material to be printed on, and an associated reference marking (23) is provided for each format on the web (02) of material to be printed on which has been printed a multiplicity of times with a recurring format.

14. A method of using an electronic image-evaluation device (01) according to Claim 13, **characterized in that** [a] sensor device is provided which emits a synchronization signal for synchronizing the image-evaluation device (01) with the movement of the web (02) of material to be printed on.

15. A method of using an electronic image-evaluation device (01) according to Claim 14, **characterized in that** the sensor device is provided in the image-evaluation device (01), *i*.*e* a surface sensor (03; 04; 06, 07) is used for the synchronization.

16. A method of using an electronic image-evaluation device (01) according to Claim 14, **characterized in that** an additional sensor device is provided in addition to the image-evaluation device (01), *i*.*e*. a further sensor is provided in addition to the surface sensor or the surface sensors of the image-evaluation device (01).

17. A method of using an electronic image-evaluation device (01) according to Claim 1 or 2, **characterized in that** a separate optical device (08) is associated with each surface sensor (03; 04; 06; 07).

18. A method of using an electronic image-evaluation device (01) according to Claim 1 or 2, **characterized in that** the surface sensor (03; 04; 06; 07) is designed in the form of a CMOS sensor.

## Revendications

1. Procédé pour utilisation d'un dispositif électronique d'évaluation d'images (01) avec au moins un capteur à éléments de surface (03 ; 04 ; 06 ; 07), présentant une pluralité de pixels sensibles à la lumière, chaque pixel délivrant, en fonction du signal d'entrée lumineux reçu sur la position de pixel correspondante, un signal de sortie dont l'intensité est en corrélation avec le signal d'entrée de lumière et est évaluable dans une unité d'évaluation, en tant qu'information d'image, sachant que les pixels du capteur à éléments de surface (03 ; 04 ; 06 ; 07), peuvent être commandés et évalués individuellement et/ou par groupes, de sorte que des parties (21 ; 22), susceptibles d'être sélectionnées librement, issues de la zone de balayage d'exploration (09 ; 11 ; 12 ; 13) maximale observable peuvent évaluées sélectivement, sachant que, dans le dispositif d'évaluation d'images (01), sont prévus plusieurs capteurs à éléments de surface (03 ; 04 ; 06 ; 07) et le dispositif d'évaluation d'images (01) étant utilisé pour examiner un produit d'impression (02) et, dans le dispositif d'évaluation d'images (01), étant prévu un dispositif de transport, à l'aide duquel le produit d'impression (02) peut être transporté en passant sur les capteurs à éléments de surface (03 ; 04 ; 06 ; 07), et les parties, sélectionnées pour l'observation, des différents capteurs à éléments de surface (03 ; 04 ; 06 ; 07) sont sélectionnées en fonction du déplacement de transport du produit d'impression (02).

2. Procédé pour utilisation d'un dispositif électronique d'évaluation d'images (01) avec au moins un capteur à éléments de surface (03 ; 04 ; 06 ; 07), présentant une pluralité de pixels sensibles à la lumière, chaque pixel délivrant, en fonction du signal d'entrée lumineux reçu sur la position de pixel correspondante, un signal de sortie dont l'intensité est en corrélation avec le signal d'entrée de lumière et est évaluable dans une unité d'évaluation, en tant qu'information d'image, sachant que les pixels du capteur à éléments de surface (03 ; 04 ; 06 ; 07), peuvent être commandés et évalués individuellement et/ou par groupes, de sorte que des parties (21 ; 22), susceptibles d'être sélectionnées librement, issues de la zone de balayage d'exploration (09 ; 11 ; 12 , 13) maximale observable peuvent évaluées sélectmement, un dispositif d'évaluation d'images (01) étant associé à un dispositif d'illumination et le dispositif d'illumination étant réalisé sous la forme de dispositifs à illumination par éclairs fonctionnant à une fréquence de répétition déterminée, ou bien un obturateur de pleine image étant disposé, le dispositif d'évaluation d'images (01) étant utilisé pour contrôler un produit d'impression (02), sachant que, dans le dispositif d'évaluation d'images (01), est prévu un dispositif de transport, à l'aide duquel le produit d'impression (02) peut être transporté en passant sur le capteur à éléments de surface (03 ; 04 ; 06 ; 07), les pixels des capteurs à éléments de surface (03 ; 04 ; 06 ; 07) étant susceptibles d'être commandés et évalués en fonction du mouvement de transport du produit d'impression (02).

3. Procédé pour utilisation d'un dispositif électronique d'évaluation d'images (01) selon la revendication 1, **caractérisé en ce que** la zone d'observation par balayage (09 ; 11 ; 12 , 13) maximale observable de chaque capteur à éléments de surface (03 ; 04 ; 06 ; 07) est rectangulaire.

4. Procédé pour utilisation d'un dispositif électronique d'évaluation d'images (01) selon la revendication 2, **caractérisé en ce que** la zone d'observation par balayage (09 ; 11 ; 12 ; 13) maximale observable de chaque capteur à éléments de surface (03 ; 04 ; 06 ; 07) est rectangulaire.

5. Procédé pour utilisation d'un dispositif électronique d'évaluation d'images (01) selon la revendication 2, **caractérisé en ce qu'**une pluralité de capteurs à éléments de surface (03 ; 04 ; 06 ; 07) sont prévus dans le dispositif d'évaluation d'images (01).

6. Procédé pour utilisation d'un dispositif électronique d'évaluation d'images (01) selon la revendication 1 ou 5, **caractérisé en ce que** les zones de balayage par observation (09 ; 11 ; 12 ; 13) maximale observable des différents capteurs à éléments de surface (03 ; 04 ; 06 ; 07) se chevauchent en des zones de chevauchement (14 ; 16 ; 17).

7. Procédé pour utilisation d'un dispositif électronique d'évaluation d'images (01) selon la revendication 1, 5 ou 6, **caractérisé en ce que** les plages d'exploration par balayage (09 ; 11 ; 12 ; 13) maximales observables des capteurs à éléments de surface (03 ; 04 ; 06 ; 07) donnent ensemble une plage d'observation par balayage globale rectangulaire.

8. Procédé pour utilisation d'un dispositif électronique d'évaluation d'images (01) selon la revendication 1 ou 5, **caractérisé en ce qu'**une pluralité de capteurs à éléments de surface (03 ; 04 , 06 ; 07) sont disposés sur un élément support commun.

9. Procédé pour utilisation d'un dispositif électronique d'évaluation d'images (01) selon la revendication 1, **caractérisé en ce que**, dans le dispositif d'évaluation d'images (01), est prévu un dispositif d'illumination à l'aide duquel le produit d'impression (02) peut être illuminé.

10. Procédé pour utilisation d'un dispositif électronique d'évaluation d'images (01) selon la revendication 9, caracténsé en ce que le dispositif d'illumination est réalisé à la façon d'une illumination par éclairs.

11. Procédé pour utilisation d'un dispositif électronique d'évaluation d'images (01) selon la revendication 10, **caractérisé en ce que** l'illumination par éclairs est produite à une fréquence de répétition déterminée.

12. Procédé pour utilisation d'un dispositif électronique d'évaluation d'images (01) selon la revendication 1, **caractérisé en ce qu'**un obturateur à image pleine est prévu dans le dispositif d'évaluation d'images (01).

13. Procédé pour utilisation d'un dispositif électronique d'évaluation d'images (01) selon la revendication 1, **caractérisé en ce que** le dispositif d'évaluation d'images (01) est utilisé pour le contrôle d'une bande de produit à imprimer (02), **en ce qu'**un marquage de référence (23) associé est disposé pour chaque format, sur la bande de produit à imprimer (02), qui est imprimée à plusieurs reprises sous un format se répétant.

14. Procédé pour utilisation d'un dispositif électronique d'évaluation d'images (01) selon la revendication 13, **caractérisé en ce qu'**un dispositif à capteur est prévu, émettant un signal de synchronisation pour assurer la synchronisation du dispositif d'évaluation d'images (01) envers le déplacement de la bande de produit à imprimer (02).

15. Procédé pour utilisation d'un dispositif électronique d'évaluation d'images (01) selon la revendication 14, caracténsé en ce que, dans le dispositif d'évaluation d'images (01), est prévu le dispositif à capteur, c'est-à-dire qu'un capteur à éléments de surface (03 ; 04 ; 06 ; 07) est utilisé pour la synchronisation.

16. Procédé pour utilisation d'un dispositif électronique d'évaluation d'images (01) selon la revendication 14, **caractérisé en ce que**, en plus du dispositif d'évaluation d'image (01), est disposé un dispositif à capteur supplémentairè, c'est-à-dire qu'en plus du capteur à éléments de surface ou des capteurs à éléments de surface du dispositif d'évaluation d'images (01) est prévu un autre capteur.

17. Procédé pour utilisation d'un dispositif électronique d'évaluation d'images (01) selon la revendication 1 ou 2, **caractérisé en ce qu'**une optique (08) propre est associée à chaque capteur à éléments de surface (03 ; 04 ; 06 , 07).

18. Procédé pour utilisation d'un dispositif électronique d'évaluation d'images (01) selon la revendication 1 ou 2, **caractérisé en ce que** le capteur à éléments de surface (03 ; 04 ; 06 ; 07) est réalisé sous la forme de capteur CMOS.
